Europäisches Patentamt

European Patent Office

Office européen des brevets

(19)

(11) Veröffentlichungsnummer : **0 121 119**
**B1**

(12) **EUROPÄISCHE PATENTSCHRIFT**

(45) Veröffentlichungstag der Patentschrift :
28.05.86

(51) Int. Cl.⁴ : **B 60 N 3/08**, B 60 N 3/02,
A 24 F 19/10, A 24 F 19/06

(21) Anmeldenummer : **84102264.3**

(22) Anmeldetag : **02.03.84**

(54) **Ascher, insbesondere für Fahrzeuge.**

(30) Priorität : **24.03.83 DE 3310658**

(43) Veröffentlichungstag der Anmeldung :
**10.10.84 Patentblatt 84/41**

(45) Bekanntmachung des Hinweises auf die Patenterteilung : **28.05.86 Patentblatt 86/22**

(84) Benannte Vertragsstaaten :
**BE DE FR GB IT NL SE**

(56) Entgegenhaltungen :
**EP-A- 0 007 974**
**DE-A- 2 709 185**
**GB-A-   686 156**
**US-A- 3 771 754**

(73) Patentinhaber : **Gebr. Happich GmbH**
**Postfach 10 02 49 Clausenbrücke 1**
**D-5600 Wuppertal 1 (DE)**

(72) Erfinder : **Dietz, Günter**
**Eggenbruch 97**
**D-5600 Wuppertal 1 (DE)**
Erfinder : **Dabringhaus, Volker**
**Erkratherstrasse 63**
**D-5600 Wuppertal 11 (DE)**

Jouve, 18, rue St-Denis, 75001 Paris, France

## Beschreibung

Die Erfindung bezieht sich auf einen Ascher, insbesondere für Fahrzeuge, mit einem einen Aschertopf aufnehmenden Aschergehäuse, welches an einer Anschlußfläche, vornehmlich einer Rückenlehnenrückwand eines Fahrzeugsitzes befestigbar ist und Ausrüstungsteile in Form von Haltegriffen, Garderobenhaken od. dgl. aufweist.

Im allgemeinen werden heute Fahrzeuge mit Aschern ausgerüstet. Die Ascher finden dabei ihre Anordnung im Bereich des Armaturenbrettes, der Konsolen oder Karosserieseitenwandungen. Insbesondere werden Ascher aber auch an den Rückenlehnen von Fahrzeugsitzen, z. B. in Reisebussen, Flugzeugen oder Schiffen angebracht. In Reisebussen gehören an den Rückenlehnenrückwänden der Fahrzeugsitze angebrachte Ascher praktisch zur Grundausstattung. Je nach Komfortstufe sind an den Rückenlehnenrückwänden der Fahrzeugsitze zudem noch Haltegriffe und/oder Garderobenhaken und/oder Trinkbecherhalter angebracht. Jedes dieser Ausrüstungsteile wird separat gefertigt und montiert, was einen beträchtlichen Aufwand bedeutet.

Durch die EP-A-0 007 974 ist eine Garnitur für Fahrzeuge, insbesondere an Rückenlehnen von Fahrzeugsitzen, die aus Halteelementen zum Festhalten und zur Aufnahme von Gerätschaften und aus einem Aschergehäuse mit einem darin eingesetzten Ascher besteht, bekanntgeworden, die als eine einstückige Baueinheit ausgebildet ist, welche einen Haltegriff, ein Aschergehäuse, zumindest einen Kleiderhaken und zwei in Einbaulage senkrecht ausgerichtete Stecköffnungen umfaßt, die links und rechts neben dem Aschergehäuse angeordnet sind. Bei dieser bekannten Garnitur entfällt zwar die separate Fertigung und Montage der einzelnen Ausrüstungsteile, jedoch besteht hinsichtlich der Ausbildung und Anordnung der Ausrüstungsteile keine Variationsmöglichkeit, was in Anbetracht dessen, daß jeder Fahrzeughersteller andere Vorstellungen über das ästhetische Erscheinungsbild, das eine derartige Garnitur aufweisen sollte, hat, dazu führt, daß praktisch für jeden neuen Fahrzeugtyp und für die einzelnen Fahrzeughersteller jeweils neue Garnituren sowie entsprechende Herstellungswerkzeuge entwickelt und konstruiert werden müssen.

Der Erfindung liegt nun die Aufgabe zugrunde, einen Ascher so zu gestalten, daß er mit zusätzlichen, wahlweise kombinierbaren, insbesondere auch untereinander austauschbaren Ausrüstungsteilen, wie Haltegriffen, Garderobenhaken, Trinkbecherhalter od. dgl. bestückbar ist.

Zur Lösung dieser Aufgabe ist erfindungsgemäß vorgesehen, daß das Aschergehäuse mit Aufnahmen zur einendigen Festlegung der Ausrüstungsteile ausgebildet ist und daß die Ausrüstungsteile einendig übereinstimmende Endstücke aufweisen. Dabei sind die Aufnahmen vorzugsweise an den Seitenwandungen des Aschergehäuses angeordnet.

Durch die Erfindung ist es relativ leicht möglich, Kundenwünsche zu erfüllen ; wobei nach dem Baukastenprinzip vorgegangen werden kann. Dabei bildet der aus Aschertopf und Aschergehäuse bestehende Ascher das Baukasten-Grundelement, welches auch für sich alleine Verwendung finden kann. Das Grundelement Ascher kann nun, je nach Komfortstufe, ein- oder beidseitig mit einem Haltegriff ergänzt werden, wobei jeder Haltegriff nur noch an dem dem Ascher abgewandten Ende einer separaten Befestigung bedarf. Es ist auch möglich, die aus Ascher, Haltegriff und Garderobenhaken oder Ascher, Haltegriff und Trinkbecherhalter bestehenden Bauelemente miteinander zu kombinieren bzw. an dem Ascher jeweils das oder die Bauelemente anzuordnen, die jeweils erwünscht sind. Da jedes Anbauteil an einem Endbereich eine mit den anderen Anbauteilen übereinstimmende Ausbildung aufweist, ist auch der Vorteil einer jederzeitigen Austauschbarkeit der Anbauteile untereinander gegeben.

Gemäß der Erfindung können die Aufnahmen als Stecköffnungen ausgebildet sein, wobei in weiterer Ausgestaltung der Erfindung vorgesehen werden kann, daß die Aufnahmen außenseitig durch ein bündig mit der Außenfläche des Aschergehäuses abschließendes ausbrechbares Wandungsteil verschlossen sind. Durch diese erfindungsgemäßen Maßnahmen unterscheidet sich der neue Ascher äußerlich nicht oder allenfalls nur geringfügig von Aschern herkömmlicher Art und ist dennoch mit den Komfort eines Reisebusses od. dgl. erhöhenden Bauelementen bestückbar.

Eine alternative Ausführungsform der Erfindung kann darin bestehen, daß die Aufnahmen als die Seitenwandungen des Aschergehäuses überragende und von den Endstücken der Ausrüstungsteile jeweils übergriffene Zapfen ausgebildet sind.

Eine bevorzugte Ausgestaltung der Erfindung besteht darin, daß die Aufnahmen, unabhängig davon, ob sie nun als Stecköffnungen oder überstehende Zapfen ausgebildet sind, und die Endstücke der Ausrüstungsteile jeweils sie querende Durchgangsbohrungen zur Durchführung von das Aschergehäuse sowie die Ausrüstungsteile gemeinsam an einer Anschlußfläche festlegenden Befestigungsschrauben aufweisen. Hierdurch ergibt sich wegen der gemeinsamen Festlegung von Ascher und dem jeweiligen Ausrüstungsteil eine beträchtliche Montagevereinfachung bzw. Verkürzung der sonst benötigten Montagezeit.

Nach einer weiteren bevorzugten Ausführungsform der Erfindung ist vorgesehen, daß die Endstücke der Ausrüstungsteile und die Aufnahmen eine ein Einrenken der Ausrüstungsteile in die Aufnahmen ermöglichende Ausbildung aufweisen. Diese Maßnahme bietet sich insbesondere dann an, wenn eine schnell und einfach durchzuführende Austauschbarkeit der Ausrüstungsteile gewünscht wird.

Eine alternative Lösung kann darin bestehen, daß die Endstücke der Ausrüstungsteile und die Aufnahmen jeweils ein Gewinde aufweisen und die Ausrüstungsteile schraubgemäß an dem Aschergehäuse festlegbar sind. Beim Umrüsten wird dann lediglich das nicht benötigte Ausrüstungsteil, z. B. ein Garderobenhaken aus der Ausnahme herausgeschraubt und das gewünschte Ausrüstungsteil, z. B. ein Trinkbecherhalter in die Aufnahme eingeschraubt.

Ausführungsbeispiele der Erfindung werden nachfolgend anhand der Zeichnung näher erläutert. Es zeigen :

Figur 1 den Ascher in Frontansicht,

Figur 2 den Ascher in Seitenansicht,

Figur 3 den mit Haltegriffen bestückten Ascher in Frontansicht,

Figur 4 einen Schnitt etwa folgend der Linie IV-IV in Fig. 3,

Figur 5 den mit von Fig. 3 abweichenden Ausrüstungsteilen bestückten Ascher,

Figur 6 eine Draufsicht auf den Ascher nach Fig. 3 und

Figur 7 bis 10 Ausführungsbeispiele jeweils im Verbindungsbereich zwischen Ascher und Ausrüstungsteilen.

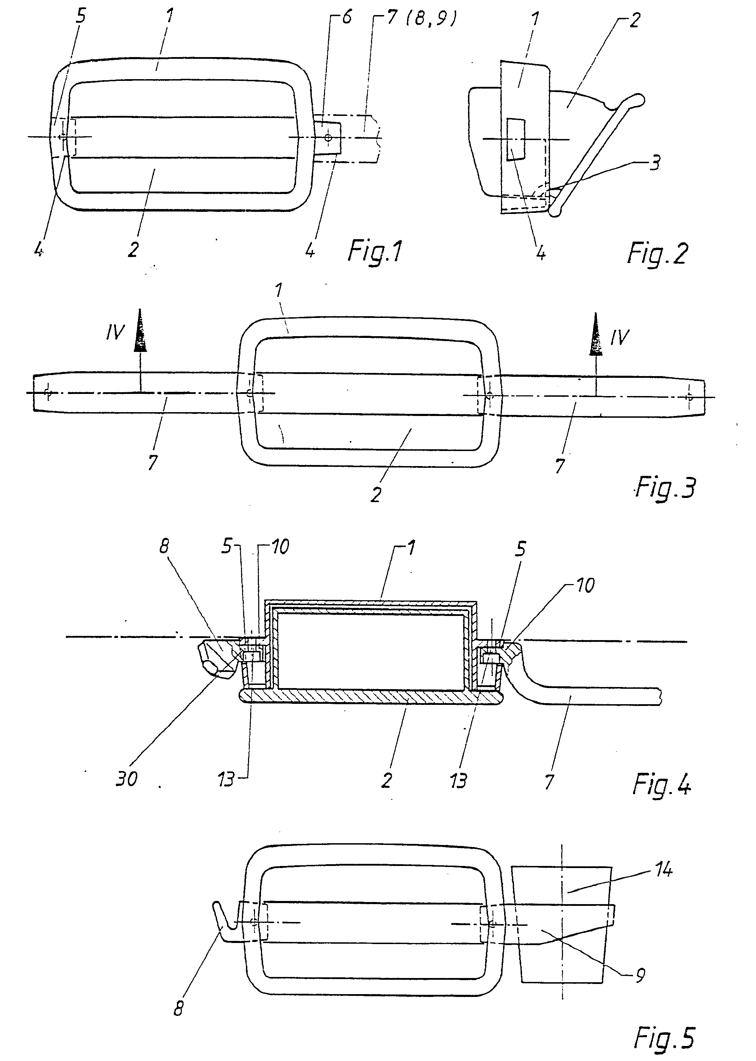

Die Fig. 1 und 2 zeigen einen aus einem Aschergehäuse 1 und einem Aschertopf 2 bestehenden Ascher. Im dargestellten Ausführungsbeispiel handelt es sich um einen sogenannten « Kippascher », bei dem der Aschertopf 2 um eine Achse 3 kippbeweglich im Aschergehäuse 1 gelagert ist. Es versteht sich, daß sich die Erfindung auch verwirklichen läßt, wenn der Aschertopf 2 z. B. schubladenartig im Aschergehäuse 1 aufgenommen ist.

In Fig. 1 ist zeichnungslinksseitig eine Aufnahme 4 gezeigt, die als die Außenwandung des Aschergehäuses 1 durchbrechende Stecköffnung 5 ausgebildet ist, während die zeichnungsrechtsseitige Aufnahme 4 aus einem das Aschergehäuse 1 seitlich überragenden Zapfen 6 besteht.

Der Ascher bildet das auch für sich alleine verwendbare Grundelement eines Baukastensystems, zu dem neben dem Ascher, Haltegriffe 7, Garderobenhaken 8, Trinkbecherhalter 9 oder ähnliche Ausrüstungsteile gehören. Weist der Ascher Aufnahmen 4 in Form von Stecköffnungen 5 auf, so sind alle mit dem Ascher kombinierbaren Ausrüstungsteile einendig mit einem in die Stecköffnung 5 passenden Endstück 10 ausgebildet. Ebenso verhält es sich, wenn die Aufnahmen 4 aus Zapfen 6 bestehen, die dann von den Endstücken 10 der Ausrüstungsteile übergriffen oder umgriffen werden, wie dies in Fig. 1 strichpunktiert angedeutet ist.

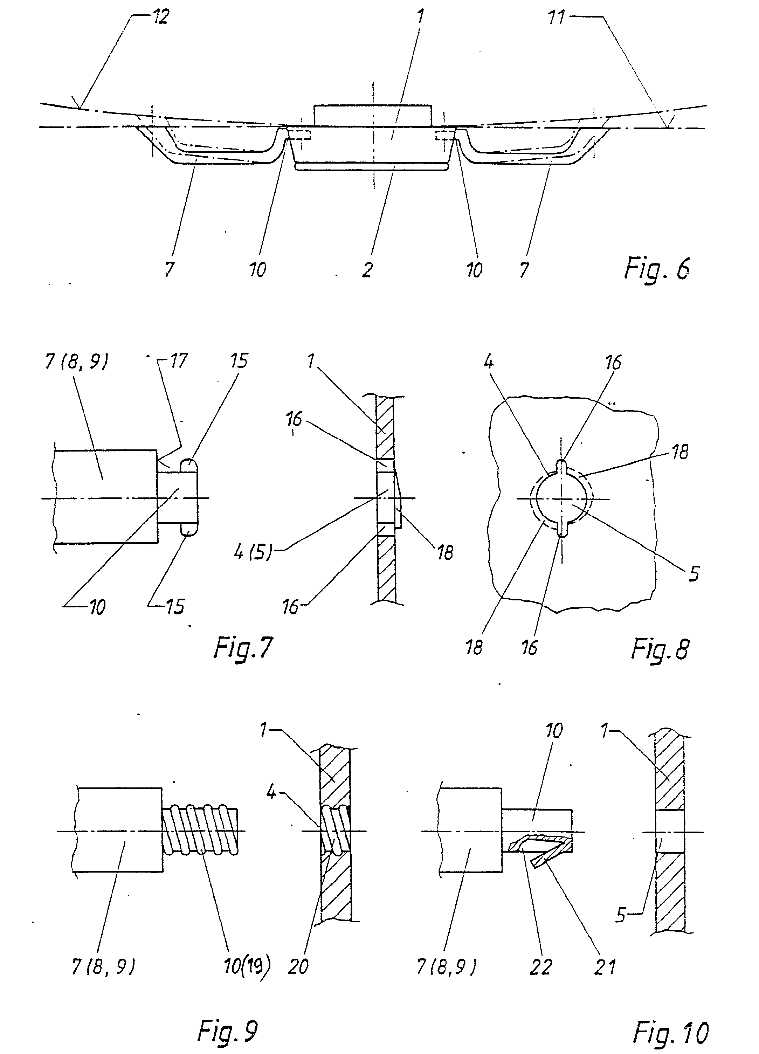

Fig. 3 zeigt einen Ascher, der mit zwei Haltegriffen 7 bestückt ist. Fig. 6 zeigt eine Draufsicht der Anordnung nach Fig. 3, wobei insbesondere zu erkennen ist, daß die Einheit sowohl auf planen Anlageflächen 11, als auch auf gewölbten Anlageflächen 12 montierbar ist. Die Haltegriffe 7 bestehen dabei aus biegeelastischem Material. Die Haltegriffe 7 sind, wie die Zeichnungen (vgl. z. B. Fig. 6) erkennen lassen, sowohl links als auch rechts am Ascher anordbar, so daß, da die Haltegriffe auf Umschlag einsetzbar sind, nur ein Herstellungswerkzeug für die Haltegriffe 7 benötigt wird.

Fig. 5 zeigt die Möglichkeit auf, den Ascher anstelle von Haltegriffen 7 mit anderen Ausrüstungsteilen zu bestücken, wobei hier ein Garderobenhaken 8 und ein Trinkbecherhalter 9 mit Becher 14 vorgesehen sind. Wichtig ist, daß die Ausrüstungsteile kombinierbar und, auch nachträglich, untereinander austauschbar sind.

In Fig. 4 sind nun Verbindungsbereiche von Ascher und Ausrüstungsteilen in einer Schnittdarstellung verdeutlicht, wobei zu erkennen ist, daß die hier als Stecköffnungen 5 ausgebildeten Aufnahmen 4 und die darin sitzenden Endstücke 10 der Ausrüstungsteile (Garderobenhaken 8, Haltegriff 7) jeweils eine sie querende Durchgangsbohrung 13 aufweisen.

Durch die Durchgangsbohrung 13 wird eine zur gemeinsamen Festlegung von Ascher und dem jeweiligen Ausrüstungsteil dienende Befestigungsschraube (nicht gezeigt) durchgeführt. Sofern das Ausrüstungsteil aus einem Haltegriff 7 besteht, ist noch eine zweite Befestigung am freien Haltegriffende erforderlich, während in den anderen Fällen eine Einpunktbefestigung genügt.

Fig. 7 zeigt ein Endstück 10 eines Ausrüstungsteils, welches als runder Zapfen mit nach außen abstrebenden Bärten 15 ausgebildet ist. Die Aufnahme 4 des Aschergehäuses 1, von dem hier lediglich ein Seitenwandbereich dargestellt ist, besteht aus einer runden, dem Durchmesser des Endstückes 10 angepaßten Stecköffnung 5 mit einander diametral gegenüberliegenden Öffnungserweiterungen 16 (vgl. Fig. 8). Bei der Montage wird der Zapfen in die Stecköffnung 5 eingeführt, wobei die Bärte 15 durch die Öffnungserweiterungen 16 gleiten. Durch eine Verdrehung des Ausrüstungsteils um z. B. etwa 90 Winkelgrade hintergreifen die rückseitigen Flanken der Bärte 15 den Randbereich der Stecköffnung 5, während der als Anschlag wirkende Bund 17, der das Endstück 10 begrenzt, sich gegen die Außenwandung des Aschergehäuses 1 abstützt. Um die so gebildete Einrenkverbindung zu verbessern, können ansteigende Auflaufschrägen 18 für die Bärte 15 vorgesehen sein, die ein gegenseitiges Verspannen der Teile begünstigen.

In Fig. 9 ist das Enstück 10 eines Ausrüstungsteils 7, 8, 9 als mit Außengewinde 19 versehener Zapfen und die entsprechende Aufnahme 4 des Aschergehäuses 1 als mit Innengewinde 20 versehene Bohrung ausgebildet.

Fig. 10 zeigt eine weitere Verbindungsvariante, wobei das Endstück 10 eines Ausrüstungsteils 7, 8, 9 mit einem nach außen abstrebenden Federarm 21 ausgebildet ist. Beim Einstecken des Endstücks 10 in die Stecköffnung 5 des Aschergehäuses 1 wird der Federarm 21 in die Ebene des Endstückes 10 zurückgedrängt, was durch eine Aussparung 22 begünstigt wird, und hintergreift den Stecköffnungsrand, sobald die Stecköffnung 5 passiert ist. Durch Zurückdrücken des Federarms 21 in die Aussparung 22 ist auch eine Demontierbarkeit jederzeit gegeben.

**Patentansprüche**

1. Ascher, insbesondere für Fahrzeuge, mit einem einen Aschertopf (2) aufnehmenden Aschergehäuse (1), welches an einer Anschlußfläche (11, 12), vornehmlich einer Rückenlehnenrückwand eines Fahrzeugsitzes befestigbar ist und Ausrüstungsteile in Form von Haltegriffen (7), Garderobenhaken (8) od. dgl. aufweist, dadurch gekennzeichnet, daß das Aschergehäuse (1) mit Aufnahmen (4) zur einendigen Festlegung der Ausrüstungsteile ausgebildet ist und daß die Ausrüstungsteile einendig übereinstimmende Endstücke aufweisen.

2. Ascher nach Anspruch 1, dadurch gekennzeichnet, daß die Aufnahmen (4) an den Seitenwandungen des Aschergehäuses (1) angeordnet sind.

3. Ascher nach Anspruch 1 oder 2, dadurch gekennzeichnet, daß die Aufnahmen (4) als Stecköffnungen (5) ausgebildet sind.

4. Ascher nach Anspruch 1 oder 2, dadurch gekennzeichnet, daß die Aufnahmen (4) als die Seitenwandungen des Aschergehäuses (1) überragende und von den Endstücken (10) der Ausrüstungsteile jeweils übergriffene Zapfen (6) ausgebildet sind.

5. Ascher nach einem oder mehreren der Ansprüche 1 bis 4, dadurch gekennzeichnet, daß die Aufnahmen (4) und die Endstücke (10) der Ausrüstungsteile jeweils sie querende Durchgangsbohrungen (13) zur Durchführung von das Aschergehäuse (1) sowie die Ausrüstungsteile gemeinsam an einer Anschlußfläche (11, 12) festlegenden Befestigungsschrauben aufweisen.

6. Ascher nach einem oder mehreren der Ansprüche 1 bis 4, dadurch gekennzeichnet, daß die Endstücke (10) der Ausrüstungsteile und die Aufnahmen (4) eine ein Einrenken der Ausrüstungsteile in die Aufnahmen (4) ermöglichende Ausbildung aufweisen.

7. Ascher nach einem oder mehreren der Ansprüche 1 bis 4, dadurch gekennzeichnet, daß die Endstücke (10) der Ausrüstungsteile und die Aufnahmen (4) jeweils ein Gewinde (19, 20) aufweisen und die Ausrüstungsteile schraubgemäß an dem Aschergehäuse (1) festlegbar sind.

8. Ascher, insbesondere nach Anspruch 3, dadurch gekennzeichnet, daß die Aufnahmen (4) außenseitig durch ein bündig mit dem Aschergehäuse (1) abschließendes ausbrechbares Wandungsteil (30) verschlossen sind.

**Claims**

1. An ashtray, particularly for a vehicle, comprising an outer casing (1) holding a container (2), the casing being fastenable to a mounting surface (11, 12) — especially the rear face of a vehicle-seat's backrest — and being adapted to support one or more fittings such as a grip handle (7), a clothes hook (8) or the like, characterized in that the casing (1) incorporates holding elements (4) for anchoring the fitting, or fittings, and in that one end portion of each fitting matches a respective one of the holding elements.

2. An ashtray according to claim 1, characterized in that the holding elements (4) are located at the side walls of the ashtray's outer casing (1).

3. An ashtray according to claim 1 or claim 2, characterized in that the holding elements (4) are plug-in apertures (5).

4. An ashtray according to claim 1 or claim 2, characterized in that the holding elements (4) are spigots (6) projecting from the side walls of the ashtray's outer casing (1) and being surroundable by the one end portion (10) of the respective fitting.

5. An ashtray according to any one or more of the claims 1 to 4, characterized in that the holding elements and the one end portion of the respective fitting are provided with through-bores (13) traversing both and permitting fixing screws to pass therethrough for the purpose of fastening the casing (1) together with the respective fitting to the mounting surface (11, 12).

6. An ashtray according to any one or more of the claims 1 to 4, characterized in that the one end portion (10) of the respective fittings and the respective holding element (4) are shaped so as to permit the fitting to be wrenched-in into the holding element (4).

7. An ashtray according to any one or more of the claims 1 to 4, characterized in that the one end portion (10) of the respective fitting and the respective holding element (4) are each provided with a screw thread (19, 20) and in that the fitting is screw-fastenable to the ashtray's outer casing (1).

8. An ashtray according to claim 3, characterized in that each plug-in aperture (5) is closed at its outwardly facing end by a wall portion (30) flush with the casing (1) and removable by breaking it off.

**Revendications**

1. Cendrier, notamment - pour véhicules comportant un boitier de cendrier (1) recevant le bac de cendrier (2), qui peut être fixé sur une surface de raccordement (11, 12), de préférence sur la paroi postérieure d'un dossier du véhicule et comporte des accessoires sous la forme de poignées (7) de crochets pour vêtements (8) ou l'analogue, caractérisé en ce que le boitier de cendrier (1) est réalisé avec des logements (4) pour fixer par une extrémité les accessoires, et que les accessoires comportent à une extrémité des parties terminales correspondantes.

2. Cendrier selon la revendication 1, caractérisé en ce que les logements (4) sont disposés sur les parois latérales du boitier de cendrier (1).

3. Cendrier selon la revendication 1 ou 2, caractérisé en ce que les logements (4) sont réalisés sous forme d'ouvertures d'enfichage (5).

4. Cendrier selon la revendication 1 ou 2, caractérisé en ce que les logements (4) sont réalisés sous forme de tétons (6) dépassant des parois latérales du boitier de cendrier (1) et recouverts par les parties terminales (10) des accessoires.

5. Cendrier selon une ou plusieurs des revendications 1 à 4, caractérisé en ce que les logements (4) et les parties terminales (10) des accessoires comportent des alésages traversants (13) les traversant respectivement pour le passage de vis de fixation destinées à fixer ensemble sur une surface d'appui (11, 12) le boitier de cendrier (1) ainsi que les accessoires.

6. Cendrier selon une ou plusieurs des revendications 1 à 4, caractérisé en ce que les parties terminales (10) des accessoires et les logements (4) ont une configuration qui permet un encliquetage de type baïonnette des accessoires dans les logements (4).

7. Cendrier selon une ou plusieurs des revendications 1 à 4, caractérisé en ce que les parties terminales (10) des accessoires et les logements (4) comportent respectivement un filetage (19, 20) et les accessoires peuvent être vissés sur le boitier de cendrier (1).

8. Cendrier, notamment selon la revendication 3, caractérisé en ce que les logements (4) sont fermés du côté extérieur par une cloison (30) pouvant être brisée qui affleure au niveau du boitier de cendrier (1).

0 121 119

Fig.1

Fig.2

Fig.3

Fig.4

Fig.5

Fig. 6

Fig. 7

Fig. 8

Fig. 9

Fig. 10